# FASCICULE DE BREVET EUROPEEN

(11) **EP 1 948 719 B1**
(45) Date de publication et mention de la délivrance du brevet: **16.06.2010**
(21) Numéro de dépôt: 06820319.9
(22) Date de dépôt: 19.10.2006
(51) Int. Cl.: C08J 7/00, C03C 17/34, C03C 17/30

(54) **PRODUIT SUPERHYDROPHILE OU SUPERHYDROPHOBE, PROCEDE POUR SA REALISATION ET UTILISATION DE CE PRODUIT**
SUPERHYDROPHILES ODER SUPERHYDROPHOBES PRODUKT, HERSTELLUNGSVERFAHREN DAFÜR UND VERWENDUNG DAVON
SUPERHYDROPHILIC OR SUPERHYDROPHOBIC PRODUCT, PROCESS FOR PRODUCING IT AND USE OF THIS PRODUCT

(30) Priorité: 14.11.2005 FR 0553450
(43) Date de publication de la demande: 30.07.2008
(73) Titulaire: Commissariat à l'énergie atomique et aux énergies alternatives, 75015 Paris (FR)
(72) Inventeur: CAPRON, Philippe, F-38200 Luzinay (FR); PLISSONNIER, Marc, F-38320 Eybens (FR); ROUGEAUX, Isabelle, F-38240 Meylan (FR); SAVELLI, Guillaume, F-02100 Saint Quentin (FR)
(74) Mandataire: Vuillermoz, Bruno
(86) Numéro de dépôt international: PCT/FR2006/051063
(87) Numéro de publication internationale: WO 2007/054649

(56) Documents cités:
- FR-A- 2 829 406
- FR-A- 2 864 110
- PATENT ABSTRACTS OF JAPAN vol. 012, no. 040 (C-474), 5 février 1988 (1988-02-05) -& JP 62 191447 A (STANLEY ELECTRIC CO LTD), 21 août 1987 (1987-08-21)

## Description

### DOMAINE DE L'INVENTION

La présente invention se rapporte au domaine des traitements de surface en vue de leur conférer des propriétés autonettoyantes, antisalissure, anticondensation ou de glissement vis-à-vis des fluides tels que l'eau ou l'air.

La présente invention concerne plus particulièrement un produit, dont la surface externe présente un revêtement développant un caractère superhydrophile ou un caractère superhydrophobe. Elle concerne également un procédé de réalisation d'un tel revêtement outre son utilisation.

On entend par superhydrophobe, la caractéristique d'une surface sur laquelle, une goutte d'eau forme avec ladite surface un angle de contact important, typiquement supérieur à 150°. Par définition, l'angle de contact est un angle dièdre formé par deux interfaces contiguës à leur intersection apparente. Dans ce cas, la surface est qualifiée de « non mouillante » vis-à-vis de l'eau. Cette propriété est communément dénommée « l'effet Lotus ».

A l'inverse, une surface superhydrophile présente un angle de contact avec l'eau proche de 0°, voire non mesurable. Dans ce cas, la surface est qualifiée de « mouillante » vis-à-vis de l'eau.

Le domaine technique de l'invention peut, en outre, être considéré comme celui des matériaux dits « nanostructurés ».

### ETAT ANTERIEUR DE LA TECHNIQUE

De manière générale, les surfaces hydrophiles ou hydrophobes sont obtenues en déposant un film sélectivement hydrophile ou hydrophobe sur un substrat présentant des rugosités de dimensions micrométriques. En effet, les rugosités d'une surface lui confèrent ses propriétés hydrophobes ou hydrophiles. Par conséquent, elles déterminent sa déperlance (aptitude à laisser s'écouler un liquide) ainsi que ses propriétés autonettoyantes ou anticondensation. Comme l'a montré Wilhelm Barthlott, la feuille de lotus constitue un exemple de surface dont la déperlance est due à de nombreuses microsphères réparties sur cette surface.

Le caractère hydrophobe d'une surface à microrugosités se caractérise par une faible mouillabilité de la surface, et donc par un grand angle de contact, qui s'explique par le fait que le liquide repose uniquement sur les sommets des rugosités de cette surface. A l'inverse le caractère hydrophile d'une surface se caractérise par une mouillabilité importante de celle-ci, donc par un angle de contact proche de zéro, qui s'explique par le fait que le liquide « épouse » les rugosités de cette surface.

Ainsi, le caractère hydrophile ou hydrophobe est obtenu en structurant ou en « texturant » une surface, c'est-à-dire en y créant des rugosités de petites dimensions, puis en déposant sur cette surface un film en matériau hydrophile ou hydrophobe. C'est ce film qui confère au matériau son caractère hydrophile ou hydrophobe. La surface texturée est généralement une couche relativement mince qui est elle-même déposée sur un substrat ; c'est ce substrat qui possède les qualités, notamment mécaniques, propres à son utilisation dans le cadre de l'application voulue.

Ainsi, la demande de brevet FR-A-2 829 406 décrit un procédé de réalisation d'une surface autonettoyante, antisalissure et/ou anti-condensation. La structuration, ou texturation c'est-à-dire la création de rugosités sur la surface, est opérée de manière classique soit par photolithographie soit par évaporation d'un métal à travers un masque. Ensuite, un film en matériau hydrophile ou hydrophobe est déposé par électrogreffage sur cette surface préalablement texturée.

Si le procédé décrit ce document permet de réaliser une surface reproduisant les propriétés hydrophobes d'une feuille de lotus, il présente cependant certains inconvénients.

Tout d'abord, les procédés de texturation classiques, photolithographie ou évaporation d'un métal à travers un masque, conduisent à la formation de rugosités dont les dimensions sont de l'ordre de quelques micromètres, au mieux de quelques centaines de nanomètres. Avec de telles rugosités, le matériau ne présente pas la transparence à la lumière requise par de nombreuses applications, car les trop grandes rugosités empêchent une transmission suffisante de la lumière (visible).

D'autre part, la mise en oeuvre de tels procédés nécessite de nombreuses étapes et de multiples dispositifs. De plus, ces étapes ne peuvent pas être toutes réalisées dans une seule enceinte. C'est pourquoi ces procédés sont longs et coûteux à mettre en oeuvre.

On connaît par ailleurs du document FR-A-2 864 110 un procédé de réalisation de nanotubes de carbone destinés à constituer des rugosités, et sur lesquels est déposé un film en polymère hydrophobe ou comprenant une étape supplémentaire en vue de fonctionnaliser la surface texturée. Cependant, ce procédé présente également un inconvénient qui en limite les applications.

En effet, la réalisation des nanotubes nécessite une température élevée, en général de l'ordre de 600°C. Par conséquent, il n'est pas possible de traiter par ce procédé des substrats thermosensibles, tels que les polymères. Cela limite donc les applications possibles du produit hydrophobe issu d'un tel procédé aux applications pour lesquelles un substrat « thermorésistant » peut convenir.

La présente invention propose un procédé pour la réalisation de produit dont la surface externe présente des propriétés superhydrophobes ou superhydrophiles, mais qui ne présente pas les limitations et inconvénients des procédés de l'art antérieur. La présente invention concerne aussi le produit issu de ce procédé.

### EXPOSE DE L'INVENTION

La présente invention trouve application pour revêtir tout type de substrat, thermosensible ou non. Le procédé objet de l'invention, simple à mettre en oeuvre et relativement peu onéreux, permet notamment de conserver aux surfaces traitées une transparence satisfaisante, notamment à la lumière visible. Ces surfaces présentent les propriétés de déperlance, d'antisalissure et/ou d'anticondensation.

La présente invention concerne donc tout d'abord un produit possédant une propriété physique de surface, en l'espèce superhydrophile ou superhydrophobe. Ce produit comprend un substrat revêtu sur sa surface d'une couche de structuration rapportée sur cette surface et d'un film déposé sur cette couche.

Selon l'invention:
- le film est continu ;
- les propriétés physiques de ladite surface sont conférées par la nature du film ;
- et la surface de la couche recevant le film déposé présente des rugosités de dimensions nanométriques.

Ainsi, le produit résultant est transparent à la lumière notamment.

Autrement dit, le produit objet de l'invention présente successivement un substrat, une couche intermédiaire et un film de fonctionnalisation. Comme la couche et le film présentent des rugosités de dimensions nanométriques, l'ensemble constitué par la couche et le film est transparent. De plus, la nature du film combinée avec la structuration de la surface par les rugosités lui confèrent une propriété physique de surface, à savoir sélectivement un caractère superhydrophile ou un caractère superhydrophobe.

Selon une forme de réalisation avantageuse de l'invention, la couche participant au revêtement peut comprendre de l'hydrogène associé en diverses proportions de silicium et/ou de carbone. Ces matériaux présentent la propriété de réagir à une gravure de façon hétérogène.

En pratique, l'épaisseur de la couche peut être comprise entre 50 nm et 300 nm et lesdites rugosités peuvent présenter des dimensions inférieures à 50 nm. Autrement dit, les rugosités présentent des « pics », des « vallées » et des intervalles entre ces pics et vallées d'environ 50 nm. De telles dimensions permettent en effet d'obtenir un produit possédant une transparence voisine de celle du substrat avant traitement.

Selon un mode de réalisation particulier de l'invention, le film peut être constitué d'un composé sélectionné dans le groupe comprenant les polymères fluorocarbonés et les polysiloxanes. Un tel film possède une nature propre à rendre le produit superhydrophobe.

Selon un autre mode de réalisation particulier de l'invention, le film peut être constitué d'un composé sélectionné dans le groupe comprenant les silices, les polyvinylpyrydines, les polyvinylpyrrolidones, les polyols, les polyimines, les polysiloxanes modifiés (par exemple par traitement UV ou plasma sous oxygène), des molécules à radical hydroxyle ou carboxyl, de manière à rendre ledit produit superhydrophile.

Selon une forme de réalisation particulière de l'invention, l'un au moins des matériaux constitutifs du produit peut être thermosensible. En d'autres termes, le substrat, la couche et/ou le film est(sont) thermoplastique(s) ou thermodurcissable(s), c'est-à-dire qu'il(s) subi(ssen)t une déformation ou un changement de nature au cours d'une élévation de température importante. Ainsi, le produit peut être constitué de plastiques. Selon une forme de réalisation particulière de l'invention, le substrat est constitué de verre ou de polyméthylméthacrylate (PMMA). De tels matériaux présentent une telle transparence que le produit peut lui-même présenter une transparence relativement importante.

Par ailleurs, l'invention concerne également un procédé pour la réalisation d'un produit possédant une propriété physique de surface, superhydrophile ou superhydrophobe, ce produit comprenant un substrat. Selon l'invention, le procédé comprend les étapes consistant successivement :
- à rapporter une couche sur la surface externe du substrat ;
- à générer des rugosités à la surface externe de la couche rapportée sur le substrat ;
- à déposer sur la surface de la couche ainsi structurée un film continu, dont la nature confère au revêtement le caractère superhydrophile ou superhydrophobe recherché ;
les rugosités présentant des dimensions nanométriques, de telle sorte que le revêtement présente des propriétés de transparence.

Autrement dit, le procédé - objet de l'invention - comporte le dépôt d'une couche intermédiaire nanométrique sur un substrat, puis le dépôt d'un film nanométrique de fonctionnalisation sur cette couche. Comme la couche et le film ont des rugosités de dimensions nanométriques, le revêtement demeure transparent. Si de plus, le substrat est également transparent, on obtient un produit entièrement transparent. De plus, la nature du film combinée avec la structuration de la surface par les rugosités lui confèrent une propriété physique de surface spécifique, à savoir sélectivement un caractère superhydrophile ou un caractère superhydrophobe.

Selon un mode de réalisation avantageux de la présente invention, toutes les étapes du procédé peuvent être effectuées dans une enceinte de dépôt chimique en phase vapeur assistée par plasma (*PECVD* pour « *Plasma Enhanced Chemical Vapor Deposition* »). Cela simplifie le mode opératoire et minimise le matériel nécessaire et, partant, les coûts et durées de production.

En pratique, la couche est réalisée par les technologies de dépôt sous vide. Cela permet d'éviter la présence d'impuretés, telles que des poussières, qui constituent autant de défauts dans l'état de surface du produit, donc autant de points à performances réduites.

Selon une forme de réalisation avantageuse de l'invention, les rugosités sont réalisées par gravure plasma. Autrement dit, pour structurer ou texturer la surface de la couche intermédiaire, on la « bombarde » par un plasma qui attaque préférentiellement certains de ses atomes et certaines de ses structures, générant ainsi les nanorugosités.

En pratique, le film peut être déposé par un procédé sélectionné dans le groupe comprenant le dépôt chimique en phase vapeur assistée par plasma, le greffage électronique (électro-greffage) et le dépôt d'une solution de polymère suivi d'une évaporation du solvant de la solution. Ces différents procédés permettent ainsi de déposer un film continu sur la surface de la couche intermédiaire.

La présente invention concerne également l'utilisation d'un produit tel que précédemment mentionné pour une application nécessitant une surface transparente antisalissures ou anticondensation. Typiquement, ce produit est constitué par les vitres d'habitation antisalissure, les verres de lunettes antisalissures, les masques de plongée anticondensation, les optiques antisalissures de systèmes d'éclairage tels que des phares, les vitrages automobiles ou d'avion avec une face intérieure antibuée et une face extérieure autonettoyante, les panneaux solaires antisalissures, les capteurs et instruments de mesures antisalissures tels que tubes de Pitot ou sondes de température, les surfaces sanitaires antisalissures telles que celles des éviers, douches, toilettes autonettoyantes, les antennes surfaciques antisalissures telles que pour un radar ou une télévision par satellite, les ouvrages métalliques décoratifs antisalissures, diverses surfaces industrielles antisalissures telles que celles d'abattoirs, de boucheries, de charcuteries, d'hôpitaux, de cuisines, les ailes d'avions antisalissures et anticondensation, les parois intérieures de conteneurs de fluides telles que celles des bouteilles anticondensation pour récupérer 100 % du contenu.

En outre, la présente invention se rapporte à l'utilisation d'un produit tel que précédemment mentionné pour une application nécessitant une surface transparente et glissante vis-à-vis de fluides. Une telle surface est par exemple constituée par les semelles de ski, les pièces aéro- ou hydrodynamiques.

### MODE DE REALISATION DE L'INVENTION

Un substrat transparent, en l'occurrence une plaque en verre ou en polyméthylméthacrylate (PMMA), est placé à plat sur le plateau d'une enceinte de dépôt chimique en phase vapeur assistée par plasma (PECVD).

Ce substrat possède les caractéristiques mécaniques propres à l'utilisation du produit auquel il appartient, dans une application déterminée, comme par exemple les vitres d'habitation. Par « transparent », on entend, selon l'acception commune, transparent à la lumière visible. Bien évidemment, le substrat peut simultanément être transparent à d'autres rayonnements, tels que les infrarouges.

Conformément à l'une des formes de réalisation de l'invention, toutes les étapes du procédé sont effectuées dans cette même enceinte. Cela permet de simplifier le mode opératoire et de minimiser le matériel nécessaire et, partant, les coûts et durées de production. A l'inverse, les procédés de l'art antérieur ne peuvent pas se dérouler intégralement dans une seule enceinte et ils requièrent donc plus de matériel et de manutention, avec l'augmentation des coûts et des risques de casse ou de blessure que cela implique.

À une distance déterminée, environ 5 cm, du plateau de l'enceinte, est montée une électrode polarisée en basse fréquence. De manière connue en soi, cette électrode permet de générer au moment voulu un plasma en polarisant le gaz contenu dans l'enceinte.

Au début du procédé - objet de l'invention - pour réaliser le produit de l'invention, la pression dans l'enceinte est amenée à 5 mbar au moyen d'une pompe à vide primaire. Cela permet d'ôter de l'enceinte les poussières et impuretés qui pourraient altérer les propriétés physiques de la surface du produit final.

Puis on introduit dans l'enceinte de l'hélium gazeux (He) avec un débit de 1 l/min et du monosilane gazeux (SiH₄) avec un débit de 35 ml/min. Concomitamment, le substrat est exposé à un plasma obtenu à l'aide d'un générateur de puissance de 100 W pendant une durée de 5 minutes. Ainsi, la plaque en verre ou en polyméthylméthacrylate (PMMA) est recouverte d'une couche de silicium de 200 nm d'épaisseur, comprise donc entre 50 nm et 300 nm conformément à une caractéristique de l'invention.

Une telle couche pourrait également être rapportée sur le substrat transparent par tout autre moyen connu de l'homme du métier. Elle pourrait aussi être composée différemment à condition d'employer des gaz d'une autre nature.

La deuxième étape du procédé consiste à générer des rugosités à la surface externe de la couche ainsi rapportée sur le substrat. Pour cela, on réalise une étape de gravure de cette couche. Conformément à une caractéristique de l'invention, cette étape de gravure est réalisée au moyen d'un plasma, c'est-à-dire de gaz ionisé par un champ électromagnétique. Dans l'exemple choisi ici, les gaz employés sont de l'argon (Ar) et du tétrafluorocarbone (CF₄). Ces gaz sont introduits dans l'enceinte au débit de 0,61/min et sous une pression de 1 mbar. La puissance de genèse du champ électromagnétique est d'environ 100W pendant une durée de 5 minutes. Alternativement, le plasma pourrait être à base d'oxygène, d'hélium etc., le rôle de ce plasma étant « d'attaquer », de « détacher » ou « d'éroder » des atomes de la surface de la couche intermédiaire pour la structurer ou la texturer, afin de générer des nanorugosités.

C'est au cours de cette étape de nanotexturation ou nanostructuration que se forment les rugosités de dimensions nénométriques au niveau de la surface externe de la couche intermédiaire. A la fin de cette étape, la couche intermédiaire en silicium possède une épaisseur de 50 nm avec des nanorugosités dont les dimensions sont de l'ordre de 20 nm. Les nanorugosités présentent donc des « pics », des « vallées » et des intervalles entre ces pics et vallées de dimensions inférieures à 50 nm, conformément à une caractéristique de l'invention.

Comme le plasma est réparti de manière isotrope sur tout le substrat, les nanorugosités sont réparties de façon homogène sur toute la surface externe de la couche intermédiaire. Cette couche intermédiaire peut également être qualifiée de « sacrificielle » puisqu'elle perd une partie de son épaisseur au cours de cette étape de gravure. L'épaisseur diminue en effet de 200 nm à 50 nm.

Conformément à une caractéristique du procédé - objet de l'invention, la troisième étape consiste à déposer sur la surface de la couche ainsi structurée un film continu, dont la nature permet de conférer au revêtement le caractère superhydrophile ou superhydrophobe recherché. Dans l'exemple retenu pour illustrer un mode de réalisation de l'invention, le caractère souhaité est la superhydrophobicité. Néanmoins, sans sortir du cadre de la présente invention, on pourrait souhaiter à l'inverse conférer au produit un caractère superhydrophile.

Pour l'obtenir, on réalise donc un film de siloxane, qui est de nature hydrophobe. Dans ce but, un précurseur, le diméthyltétrasiloxane est introduit sous forme de gaz dans l'enceinte sous une pression de 1 mbar et à un débit de 50 ml/min, concomitamment à l'introduction d'hélium gazeux à un débit de 500 ml/min. Cette opération est réalisée sous plasma avec un générateur réglé à une puissance de 200 W pendant 25 s.

Ainsi, il se dépose sur la couche intermédiaire préalablement structurée un film continu de nature à rendre le produit hydrophobe. Dans l'exemple retenu, le film hydrophobe est composé d'un polysiloxane. Alternativement, ce film pourrait être constitué d'un composé sélectionné parmi les polymères fluorocarbonés.

A l'inverse, pour réaliser un produit superhydrophile, il faut sélectionner un composé hydrophile pour former le film. Les films hydrophiles sont nombreux et présentent la particularité de posséder des fonctions hydrophiles sans être pour autant solubles dans l'eau : ils n'absorbent pas l'eau.

Comme ce film est déposé uniformément sur une couche intermédiaire possédant des nanorugosités, il présente lui-même des nanorugosités. La présence cumulée de ces nanorugosités et de ce film hydrophobe confèrent au produit final un caractère superhydrophobe. Ainsi, si l'on dépose une goutte d'eau sur la surface externe du produit issu du procédé objet de l'invention, cette surface présente un angle de contact avec cette goutte d'eau de l'ordre de 160° avec un hystérèse de 8° environ.

De manière connue en soi, l'angle de contact est mesuré localement. Il représente l'angle formé dans un plan transversal à la surface du solide (film) par une tangente à l'enveloppe extérieure de la goutte sur une droite prise dans l'interface liquide-solide (goutte-film). Cette droite représente évidemment une direction moyenne de la surface formée à l'interface liquide-solide. D'autre part, l'hystérèse représente l'écart entre les angles de contact à l'avant et à l'arrière d'une goutte lorsque celle-ci est mise en mouvement.

L'eau a été ici prise comme exemple, mais le produit - objet de l'invention réagirait de façon similaire avec d'autres fluides, tels que les huiles. La surface du produit issu du procédé objet de l'invention présente donc également un caractère lipophobe. En principe, les surfaces hydrophiles se caractérisent en ce que l'eau mouille complètement le substrat de façon que l'angle de contact d'une goutte d'eau devient nul et non mesurable.

Le caractère superhydrophobe est une des propriétés physiques de surface spécifiques au sens de l'invention. Néanmoins, conformément à une caractéristique du produit de l'invention, on pourrait souhaiter à l'inverse conférer au produit un caractère superhydrophile. Selon l'invention, le film déposé au cours de la troisième étape du procédé de l'invention peut être constitué d'un composé sélectionné dans le groupe comprenant les silices, les polyvinylpyrydines, les polyvinylpyrrolidones, les polyols, les polyimines, les polysiloxanes modifiés, des molécules à radical hydroxyle ou carboxyl. De tels composés sont propres à rendre le produit superhydrophile, s'ils sont déposés sur une couche intermédiaire nanorugueuse.

Le film continu est ici déposé par dépôt chimique en phase vapeur assistée par plasma. Cependant, conformément à une caractéristique de l'invention, il pourrait être déposé par greffage électronique ou par « coating » (dépôt) d'une solution de polymère. Dans le cas du greffage électronique ou electrogreffage, il est cependant nécessaire de déposer une couche conductrice.

Comme aucune étape du procédé de l'invention ne requiert un chauffage à une température très élevée, la présente invention trouve application pour réaliser un produit à partir de tout type de substrat, qu'il soit ou non thermosensible. Ainsi, dans l'exemple donné ci-dessus, le substrat peut être en polyméthylméthacrylate (PMMA), dont la température limite avant déformation est d'environ 110°C. Cette caractéristique du procédé objet de l'invention constitue un avantage par rapport aux procédés de l'art antérieur décrits ci-dessus.

De plus, le procédé objet de l'invention est relativement simple à mettre en oeuvre et relativement peu onéreux. En effet, le mode opératoire et le matériel nécessaire sont simplifiés (une seule enceinte) et, partant, les coûts et durées de production sont diminués par rapport aux procédés de l'art antérieur.

L'invention concerne également le produit issu du procédé, donc transparent et possédant une propriété physique de surface spécifique, superhydrophile ou superhydrophobe. Ce produit comprend un substrat transparent, ici en verre ou en polyméthylméthacrylate (PMMA). Ce substrat est revêtu sur une partie de sa surface, par exemple l'une de ses faces s'il s'agit d'une plaque, d'une couche intermédiaire de structuration constituée de monosilane, puis d'un film continu déposé sur cette couche ; ce film étant hydrophile ou hydrophobe. Cette propriété physique spécifique du produit lui est conférée par la nature du film et par les nanorugosités de la surface de la couche recevant ce film. Ainsi, le produit demeure transparent et sa surface est superhydrophile ou superhydrophobe.

Par conséquent, lorsque la propriété physique spécifique de surface recherchée est la superhydrophobicité, la surface externe d'un tel produit présente une capacité de déperlance, d'antisalissure. Un tel produit est ainsi qualifié d'autonettoyant et/ou anticondensation. Le caractère autonettoyant d'une surface autonettoyante ou antisalissures est obtenu par réduction de la surface de contact entre cette surface et l'eau, la poussière ou d'autres polluants, ainsi que par le caractère hydrophobe du film continu déposé à la surface du produit.

En principe, les polluants ou les gouttes ne peuvent se fixer que sur les « pics » ou sommets des nanorugosités du film qui forment alors autant d'obstacles à la dissémination des polluants ou de l'eau sur la surface d'altitude inférieure. Puis, les polluants sont entraînés par les gouttes d'eau qui demeurent relativement sphériques, car elles présentent une forte énergie de surface. Ainsi, ces gouttes s'écoulent très rapidement, sous l'effet de la gravité ou de forces aérauliques, avec un mouvement de révolution qui décolle les poussières rencontrées sur les « pics » des nanorugosités. C'est l'effet antisalissures ou autonettoyant.

Les applications du produit issu du procédé de l'invention sont très nombreuses. Elles englobent toutes les applications nécessitant une surface transparente antisalissures ou anticondensation. Ces différentes applications ont été citées *supra*.

Par ailleurs, le produit de l'invention trouve aussi application lorsqu'on souhaite disposer d'une surface glissante vis-à-vis de fluides, comme pour les semelles de ski ou certaines pièces aéro- ou hydrodynamiques.

## Revendications

1. Produit doué de propriétés physiques de surface, superhydrophile ou superhydrophobe, comprenant un substrat revêtu sur sa surface d'une couche de structuration rapportée sur ladite surface et d'un film déposé sur ladite couche, ***caractérisé* en ce que** le film est continu, **en ce que** les propriétés physiques de ladite surface sont conférées par la nature du film, et **en ce que** la surface de la couche recevant le film déposé présente des rugosités de dimensions inférieures à 50 nanomètres.

2. Produit doué de propriétés physiques de surface selon la revendication 1, ***caractérisé* en ce que** l'ensemble constitué par la couche de structuration et le film est transparent.

3. Produit doué de propriétés physiques de surface selon l'une des revendications précédentes, ***caractérisé* en ce que** ladite couche comprend de l'hydrogène associé à du silicium et/ou du carbone.

4. Produit doué de propriétés physiques de surface selon l'une des revendications précédentes, ***caractérisé* en ce que** l'épaisseur de ladite couche est comprise entre 50 nm et 300 nm et **en ce que** l'espacement entre lesdites rugosités est de dimension inférieure à 50 nm.

5. Produit doué de propriétés physiques de surface selon l'une des revendications précédentes, ***caractérisé* en ce que** le film est constitué d'un composé sélectionné dans le groupe comprenant les polymères fluorocarbonés, les polysiloxanes, de manière à rendre le produit superhydrophobe.

6. Produit doué de propriétés physiques de surface selon l'une des revendications 1 à 4, ***caractérisé* en ce que** le film est constitué d'un composé sélectionné parmi le groupe comprenant les silices, les polyvinylpyrydines, les polyvinylpyrrolidones, les polyols, les polyimines, les polysiloxanes modifiés, des molécules à radical hydroxyle ou carboxyl, de manière à rendre ledit produit superhydrophile.

7. Produit doué de propriétés physiques de surface selon l'une des revendications 1 à 6, ***caractérisé* en ce que** l'un au moins de ses matériaux constitutifs, et notamment le substrat est thermosensible.

8. Produit doué de propriétés physiques de surface selon l'une des revendications précédentes, ***caractérisé* en ce que** le substrat est constitué de verre ou de polyméthylméthacrylate (PMMA).

9. Procédé pour la réalisation d'un produit doué de propriétés physiques de surface, superhydrophile ou superhydrophobe, ledit produit comprenant un substrat, ***caractérisé* en ce qu'**il consiste successivement :
- à rapporter une couche sur la surface externe dudit substrat ;
- à générer des rugosités à la surface externe de la couche ainsi rapportée sur ledit substrat ;
- à déposer sur la surface de la couche ainsi structurée un film continu, dont la nature confère au revêtement ainsi réalisé le caractère superhydrophile ou superhydrophobe recherché ;
lesdites rugosités présentant des dimensions inférieures à 50 nanomètres.

10. Procédé selon la revendication 9, ***caractérisé* en ce qu'**il est réalisé au sein d'une enceinte de dépôt chimique en phase vapeur assistée par plasma (PECVD).

11. Procédé selon l'une des revendications 9 et 10, ***caractérisé* en ce que** la couche du revêtement est réalisée par les technologies de dépôt sous vide.

12. Procédé selon l'une des revendications 9 à 11, ***caractérisé* en ce que** les rugosités sont générées par gravure plasma.

13. Procédé selon l'une des revendications 9 à 12, ***caractérisé* en ce que** le film est déposé par un procédé sélectionné dans le groupe comprenant le dépôt chimique en phase vapeur assisté par plasma, le greffage électronique (électro-greffage) et le dépôt d'une solution de polymère suivi d'une évaporation du solvant de la solution.

14. Procédé selon l'une des revendications 9 à 13, ***caractérisé* en ce que** la couche est formée selon une épaisseur comprise entre 50 nm et 300 nm et **en ce que** lesdites rugosités sont générées avec des dimensions inférieures à 50 nm.

15. Procédé selon l'une des revendications 9 à 14, ***caractérisé* en ce que** le film est constitué d'un composé sélectionné dans le groupe comprenant les polymères fluorocarbonés, les polysiloxanes, de manière à rendre ledit produit superhydrophobe.

16. Procédé selon l'une des revendications 9 à 14, ***caractérisé* en ce que** le film est constitué d'un composé sélectionné dans le groupe comprenant les silices, les polyvinylpyrydines, les polyvinylpyrrolidones, les polyols, les polyimines, les polysiloxanes modifiés, des molécules à radical hydroxyle ou carboxyl, de manière à rendre le produit superhydrophile.

17. Utilisation d'un produit selon l'une des revendications 1 à 8 pour une application nécessitant une surface transparente antisalissures ou anticondensation et choisie dans le groupe comprenant les vitres d'habitation antisalissure, les verres de lunettes antisalissures, les masques de plongée anticondensation, les optiques antisalissures de systèmes d'éclairage tels que des phares, les vitrages automobiles ou d'avion avec une face intérieure antibuée et une face extérieure autonettoyante, les panneaux solaires antisalissures, les capteurs et instruments de mesures antisalissures tels que tubes de Pitot ou sondes de température, les surfaces sanitaires antisalissures telles que celles des éviers, douches, toilettes autonettoyantes, les antennes surfaciques antisalissures telles que pour un radar ou une télévision par satellite, les ouvrages métalliques décoratifs antisalissures, diverses surfaces industrielles antisalissures telles que celles d'abattoirs, de boucheries, de charcuteries, d'hôpitaux, de cuisines, les ailes d'avions antisalissures et anticondensation, les parois intérieures de conteneurs de fluides telles que celles des bouteilles anticondensation pour récupérer 100 % du contenu.

18. Utilisation d'un produit selon l'une des revendications 1 à 8 pour une application nécessitant une surface transparente et glissante vis-à-vis de fluides et choisie dans le groupe comprenant les semelles de ski, les pièces aéro- ou hydrodynamiques.

## Claims

1. Product having superhydrophilic or superhydrophobic surface physical properties, comprising a substrate coated on its surface with a structuring layer added on to the said surface and with a film deposited on the said layer, ***characterized* in that** the film is continuous, **in that** the physical properties of the said surface are conferred by the nature of the film, and **in that** the surface of the layer receiving the deposited film has roughnesses smaller than 50 nm.

2. Product having surface physical properties according to Claim 1, ***characterized* in that** the combination of the structuring layer and the film is transparent.

3. Product having surface physical properties according to one of the preceding claims, ***characterized* in that** the said layer comprises hydrogen combined with silicon and/or carbon.

4. Product having surface physical properties according to one of the preceding claims, ***characterized* in that** the thickness of the said layer is between 50 nm and 300 nm and **in that** the spacing between the said roughnesses is smaller than 50 nm.

5. Product having surface physical properties according to one of the preceding claims, ***characterized* in that** the film consists of a compound selected from the group comprising fluorocarbon polymers, polysiloxanes, in order to make the product superhydrophobic.

6. Product having surface physical properties according to one of Claims 1 to 4, ***characterized* in that** the film consists of a compound selected from the group comprising silicas, polyvinylpyrydines, polyvinylpyrrolidones, polyols, polyimines, modified polysiloxanes, molecules having a hydroxyl or carboxyl radical, in order to make the said product superhydrophilic.

7. Product having surface physical properties according to one of Claims 1 to 6, ***characterized* in that** at least one of its constituent materials, and the substrate in particular, is heat-sensitive.

8. Product having surface physical properties according to one of the preceding claims, ***characterized* in that** the substrate consists of glass or polymethylmethacrylate (PMMA).

9. Method for producing a product having superhydrophilic or superhydrophobic surface physical properties, the said product comprising a substrate, ***characterized* in that** it consists in succession in:
- adding a layer to the outer surface of the said substrate;
- generating roughnesses of the outer surface of the layer thus added to the said substrate;
- depositing on the surface of the layer thus structured a continuous film, whereof the nature confers on the coating thereby produced the desired superhydrophilic or superhydrophobic character;
the said roughnesses having dimensions smaller than 50 nm.

10. Method according to Claim 9, ***characterized* in that** it is carried out in a plasma enhanced chemical vapour deposition (PECVD) chamber.

11. Method according to either of Claims 9 and 10, ***characterized* in that** the coating layer is prepared by vacuum deposition technologies.

12. Method according to one of Claims 9 to 11, ***characterized* in that** the roughnesses are generated by plasma etching.

13. Method according to one of Claims 9 to 12, ***characterized* in that** the film is deposited by a method selected from the group comprising plasma enhanced chemical vapour deposition, electronic grafting (electrografting) and the deposition of a polymer solution followed by an evaporation of the solvent from the solution.

14. Method according to one of Claims 9 to 13, ***characterized* in that** the layer is formed in a thickness of between 50 nm and 300 nm and **in that** the said roughnesses are generated with dimensions smaller than 50 nm.

15. Method according to one of Claims 9 to 14, ***characterized* in that** the film consists of a compound selected from the group comprising fluorocarbon polymers, polysiloxanes, in order to make the said product superhydrophobic.

16. Method according to one of Claims 9 to 14, ***characterized* in that** the film consists of a compound selected from the group comprising silicas, polyvinylpyrydines, polyvinylpyrrolidones, polyols, polyimines, modified polysiloxanes, molecules having a hydroxyl or carboxyl radical, in order to make the said product superhydrophilic.

17. Use of a product according to one of Claims 1 to 8 for an application requiring a transparent dirt-repellent or anti-condensation surface and selected from the group comprising dirt-repellent home windows, dirt-repellent spectacle lenses, anti-condensation diving masks, dirt-repellent optics of lighting systems such as headlights, automobile or aircraft windows with one moisture-repellent inner side and a self-cleaning outer side, dirt-repellent solar panels, dirt-repellent sensors and measuring instruments such as Pitot tubes or temperature probes, dirt-repellent sanitary surfaces such as those of wash basins, showers, self-cleaning toilets, dirt-repellent surface antennas such as for a radar or satellite television, dirt-repellent decorative metal structures, miscellaneous dirt-repellent industrial surfaces such as those of slaughterhouses, butcher shops, pork butcher shops, hospitals, kitchens, dirt-repellent and anti-condensation aircraft wings, inside walls of fluid containers such as those of anti-condensation bottles for recovering 100% of the content.

18. Use of a product according to one of Claims 1 to 8 for an application requiring a transparent and sliding surface with regard to fluids and selected from the group comprising ski bases, aero- or hydrodynamic parts.

## Patentansprüche

1. Mit physikalischen Oberflächeneigenschaften ausgestattetes superhydrophiles oder superhydrophobes Produkt, umfassend ein Substrat, das auf seiner Oberfläche mit einer Strukturierungsschicht, die auf dieser Oberfläche angebracht ist, und mit einem auf diese Schicht aufgetragenen Film bedeckt ist, **dadurch gekennzeichnet, dass** der Film kontinuierlich ist, dass die physikalischen Eigenschaften der Oberfläche durch die Natur des Films verliehen werden und dass die Oberfläche der Schicht, die den aufgetragenen Film aufnimmt, Rauheiten mit Abmessungen von weniger als 50 Nanometer aufweist.

2. Produkt mit physikalischen Oberflächeneigenschaften nach Anspruch 1, **dadurch gekennzeichnet, dass** die aus der Strukturierungsschicht und dem Film bestehende Einheit transparent ist.

3. Produkt mit physikalischen Oberflächeneigenschaften nach einem der vorhergehenden Ansprüche, **dadurch gekennzeichnet, dass** die Schicht mit Silicium und/oder Kohlenstoff assoziierten Wasserstoff umfasst.

4. Produkt mit physikalischen Oberflächeneigenschaften nach einem der vorhergehenden Ansprüche, **dadurch gekennzeichnet, dass** die Dicke der Schicht zwischen 50 nm und 300 nm beträgt und dass der Abstand zwischen den Rauheiten weniger als 50 nm beträgt.

5. Produkt mit physikalischen Oberflächeneigenschaften nach einem der vorhergehenden Ansprüche, **dadurch gekennzeichnet, dass** der Film aus einer Verbindung besteht, die aus der Gruppe ausgewählt ist, die die Fluorkohlenstoffpolymere und die Polysiloxane umfasst, so dass das Produkt superhydrophob gemacht wird.

6. Produkt mit physikalischen Oberflächeneigenschaften nach einem der Ansprüche 1 bis 4, **dadurch gekennzeichnet, dass** der Film aus einer Verbindung besteht, die aus der Gruppe ausgewählt ist, die die Siliciumoxide, die Polyvinylpyridine, die Polyvinylpyrrolidone, die Polyole, die Polyimine, die modifizierten Polysiloxane, Moleküle mit Hydroxyl- oder Carboxylrest umfasst, so dass das Produkt superhydrophil gemacht wird.

7. Produkt mit physikalischen Oberflächeneigenschaften nach einem der Ansprüche 1 bis 6, **dadurch gekennzeichnet, dass** mindestens einer der es bildenden Werkstoffe und insbesondere das Substrat wärmeempfindlich ist.

8. Produkt mit physikalischen Oberflächeneigenschaften nach einem der vorhergehenden Ansprüche, **dadurch gekennzeichnet, dass** das Substrat aus Glas oder Polymethylmethacrylat (PMMA) besteht.

9. Verfahren zur Herstellung eines mit physikalischen Oberflächeneigenschaften ausgestatteten superhydrophilen oder superhydrophoben Produkts wobei das Produkt ein Substrat umfasst, **dadurch gekennzeichnet, dass** es nacheinander darin besteht, dass
- eine Schicht auf einer Außenfläche des Substrats angebracht wird;
- auf der Außenfläche der auf diese Weise auf dem Substrat angebrachten Schicht Rauheiten erzeugt werden;
- auf der Oberfläche der auf diese Weise strukturierten Schicht ein kontinuierlicher Film aufgebracht wird, dessen Natur der auf diese Weise hergestellten Beschichtung den angestrebten superhydrophilen oder superhydrophoben Charakter verleiht;
wobei die Rauheiten Abmessungen von weniger als 50 Nanometer aufweisen.

10. Verfahren nach Anspruch 9, **dadurch gekennzeichnet, dass** es in einer Kammer zur plasmaunterstützten chemischen Gasphasenabscheidung (PECVD) durchgeführt wird.

11. Verfahren nach einem der Ansprüche 9 und 10, **dadurch gekennzeichnet, dass** die Schicht der Beschichtung durch Vakuumauftragverfahren hergestellt wird.

12. Verfahren nach einem der Ansprüche 9 bis 11, **dadurch gekennzeichnet, dass** die Rauheiten durch Plasmagravur erzeugt werden.

13. Verfahren nach einem der Ansprüche 9 bis 12, **dadurch gekennzeichnet, dass** der Film durch ein Verfahren aufgetragen wird, das in der Gruppe ausgewählt wird, die umfasst die plasmaunterstützte chemische Gasphasenabscheidung, die elektronische Pfropfung (Elektropfropfung) und den Auftrag einer Polymerlösung, auf den eine Abdampfung des Lösungsmittels folgt.

14. Verfahren nach einem der Ansprüche 9 bis 13, **dadurch gekennzeichnet, dass** die Schicht in einer Dicke zwischen 50 nm und 300 nm gebildet wird und dass die Rauheiten mit Abmessungen von weniger als 50 nm erzeugt werden.

15. Verfahren nach einem der Ansprüche 9 bis 14, **dadurch gekennzeichnet, dass** der Film aus einer Verbindung besteht, die aus der Gruppe ausgewählt ist, die die Fluorkohlenstoffpolymere und die Polysiloxane umfasst, so dass das Produkt superhydrophob gemacht wird.

16. Verfahren nach einem der Ansprüche 9 bis 14, **dadurch gekennzeichnet, dass** der Film aus einer Verbindung besteht, die aus der Gruppe ausgewählt ist, die die Siliciumoxide, die Polyvinylpyridine, die Polyvinylpyrrolidone, die Polyole, die Polyimine, die modifizierten Polysiloxane, Moleküle mit Hydroxyl- oder Carboxylrest umfasst, so dass das Produkt superhydrophil gemacht wird.

17. Verwendung eines Produkts nach einem der Ansprüche 1 bis 8 für eine Anwendung, die eine schmutzabweisende oder beschlagfreie transparente Oberfläche erfordert und ausgewählt ist aus der Gruppe, die umfasst: schmutzabweisende Wohnungsfensterscheiben, schmutzabweisende Brillengläser, beschlagfreie Taucherbrillen, schmutzabweisende Optiken von Beleuchtungssystemen wie Scheinwerfern, Kraftfahrzeug- oder Flugzeugscheiben mit einer beschlagfreien Innenseite und einer selbstreinigenden Außenseite, schmutzabweisende Solarzellen, schmutzabweisende Fühler und Messinstrumente wie Pitotrohre oder Temperatursonden, schmutzfreie sanitäre Oberflächen, wie Oberflächen von Spülen, Duschen, selbstreinigenden Toiletten, schmutzabweisende Flächenantennen, wie Radar- oder Satellitenfernsehantennen, schmutzabweisende metallische Zierobjekte, diverse schmutzabweisende Industrieoberflächen, wie Oberflächen von Schlachtbetrieben, Fleisch- und Wurstverarbeitungsbetrieben, Krankenhäusern, Küchen, schmutzabweisende und beschlagfreie Flugzeugtragwerke, Innenwände von Fluidbehältern wie von beschlagfreien Flaschen zur Gewinnung von 100% des Inhalts.

18. Verwendung eines Produkts nach einem der Ansprüche 1 bis 8 für eine Anwendung, die eine transparente und gegenüber Fluiden gleitende Oberfläche erfordert und die aus der Gruppe ausgewählt ist, die Skibeläge und äro- oder hydrodynamische Teile umfasst.
